# EUROPÄISCHE PATENTANMELDUNG

(11) **EP 0 714 185 A2**
(43) Veröffentlichungstag der Anmeldung: **29.05.1996**
(21) Anmeldenummer: 95118289.8
(22) Anmeldetag: 21.11.1995
(51) Int. Cl.: H04H 1/00

(54) **Verfahren zum Übertragen eines digitalen Tonsignals (DAB) und eines analogen Fernsehprogrammes über ein und denselben Kanal**

(30) Priorität: 23.11.1994 DE 4441606
(71) Anmelder: DEUTSCHE THOMSON-BRANDT GMBH, D-78048 Villingen-Schwenningen (DE)
(72) Erfinder: Pausch, Michael, D-82194 Gröbenzell (DE)
(74) Vertreter: Hartnack, Wolfgang, Dipl.-Ing.

(57) **Zusammenfassung**

Zum Übertragen eines digitalen Datensignals in einem analogen Fernsehkanal ist es erforderlich, daß die Standorte von Sendern für das gleichkanalige, analoge Fernsehsignal und das digitale Datensignal identisch sind. Ferner muß die Trägerfrequenz (f1*) des digitalen Datensignals zwischen der Bildträgerfrequenz und der Farbhilfsträgerfrequenz des gleichkanaligen, analogen Fernsehsignals liegen. Das gleichkanalige, analoge Fernsehsignal und das digitale Datensignal werden in orthogonaler Polarisation zueinander abgestrahlt. Schließlich muß die abgestrahlte Leistung des digitalen Datensignals in allen Richtungen wesentlich kleiner sein als die des gleichkanaligen analogen Fernsehsignals.

## Beschreibung

Die Erfindung bezieht sich auf ein Verfahren zum Übertragen eines digitalen Datenstroms, typischerweise einem digitalisierten Hörfunksignal. Ein derartiges Verfahren ist als europäisches Forschungsprojekt Eureka 147 unter der Bezeichnung "DAB" (Digital Audio Broadcasting) bekannt.

Aufgrund bestehender international und national verbindlicher Frequenzzuweisungen steht zur terrestrischen Verbreitung von qualitativ höherwertigen Tonprogrammen nur der UKW-Frequenzbereich (87,6 MHz bis 107,9 MHz) zur Verfügung. Die Anzahl der übertragbaren Programme sowie deren technische Qualität sind durch das verwendete Modulationsverfahren FM (Frequenzmodulation, hier mit max. 75 KHz Frequenzhub)) begrenzt. So lassen sich zum Beispiel innerhalb eines Versorgungsgebietes (z.B. einem Bundesland oder einer Nation) aufgrund des begrenzten Spektrums ca. fünf bis sechs analoge Hörfunkprogramme flächendeckend und zusätzlich noch eine begrenzte Anzahl lokal empfangbarer Programme verbreiten. Die mit diesem Verfahren erreichbare Übertragungsqualität ist jedoch sowohl für den stationären und insbesodere für den mobilen Empfang sehr viel geringer, als die heute mit digitalen Tonträgern erreichbare Qualität im Konsumer Bereich bei der Heimanwendung oder im Auto.

Durch die Einführung und inzwischen weit fortgeschrittene Verbreitung von digitalen Tonträgersystemen im Konsumer Bereich (CD-Compact Disc, DAT-Digital Audio Tape, DCC-Digital Compact Cassette, Mini Disc) ist für den potentiellen Rundfunkhörer ein neuer Qualitätsmaßstab gesetzt worden. Das bestehende terrestrische analoge Hörrundfunkübertragungsverfahren kann diesem Maßstab nicht gerecht werden.

Deshalb bemüht man sich auf nationaler und internationaler Ebene für die Einführung von "DAB-Eureka 147" geeignete Frequenzbereiche zu finden, um das bestehende analoge UKW-FM System durch das digitale DAB System nach dem Eureka 147-Standard zu ergänzen, und längerfristig evtl. zu ersetzen. Eine Einführung des digitalen DAB Systems im bestehenden Hörfunk Frequenzband ist durch dessen dichte Belegung mit in Betrieb befindlichen UKW-FM Sendern und der Unverträglichkeit zwischen dem FM-Übertragungsverfahren und DAB nicht möglich.

Die Einführung von in einem definiertem Versorgungsgebiet flächendeckendem DAB soll deshalb in einem anderem, bisher ausschließlich durch Fernsehsignale genutzten, Frequenzbereich erfolgen. Die bestehenden Fernseh-Sender in diesem Frequenzbereich müssen umgeplant und auf andere Fernsehkanäle verlegt werden. Da die bestehende terrestrische Fernsehversorgung durch die Einführung von DAB nicht beeinträchtigt werden soll, steht nur ein begrenztes Spektrum, nach bisher erfolgten Untersuchungen der Fernseh-Kanal 12, (223 MHz bis 230 MHz), in einigen europäischen Staaten der Bereich 230 MHz bis 240 MHz, Teile des L-Bandes (1452 MHz bis 1492 MHz) und Teile der Fersehkanäle 3 und 4 zur Verfügung. Da diese Frequenzen nicht überall in Europa zur Verfügung stehen, und außerdem aus dem Spektrum des L-Bandes nur Teilbereiche zur terrestrischen DAB Anwendung vorgesehen sind, haben verschiedene frequenztechnische Untersuchungen gezeigt, daß auf europäischer Ebene die flächendeckende Versorgung von Versorgungsgebieten möglich ist, eine lokale oder regionale Versorgung aber in vielen Fällen an mangelndem Spektrum scheitert.

Die Aufgabe der Erfindung besteht darin, eine digitale terrestrische, mobil und stationär empfangbare Hörfunkübertragung zu ermöglichen, ohne bestehende Übertragungssysteme, insbesondere analoges Fernsehen, zu beeinträchtigen und gleichzeitig ohne neue Frequenzzuteilungen auszukommen.

Diese Aufgabe wird erfindungsgemäß durch die kennzeichnenden Merkmale des Anspruchs 1 gelöst.

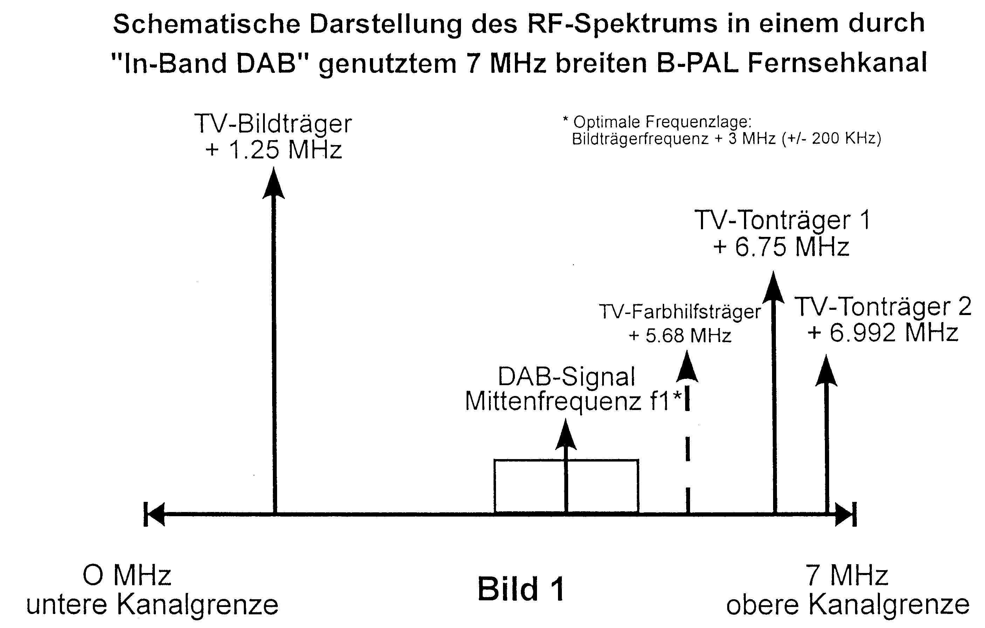

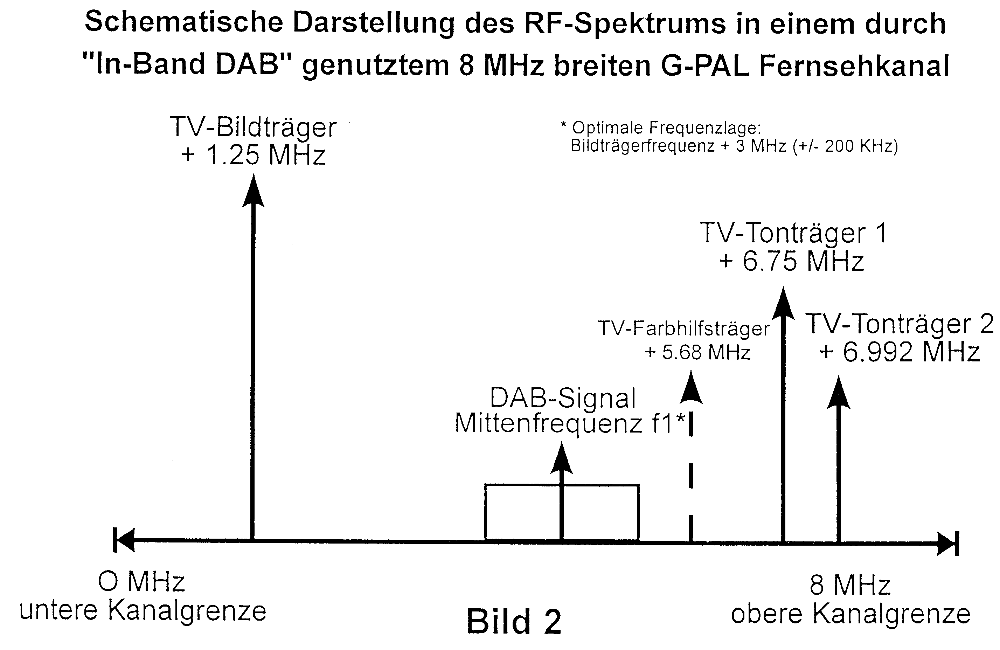

Die Erfindung beruht zunächst auf der Überlegung, daß der Signal-Rauschabstand bei einer analogen Bild- und Tonausstrahlung wesentlich größer sein muß als bei einer digitalen Datenausstrahlung mit einem geeignetem Modulationsverfahren. Als geeignetes Modulationsverfahren für die digitale Abstrahlung, insbesondere für mobilen und stationären Empfang, hat sich in Versuchen COFDM (Coded Orthogonal Frequency Divison Multiplex) gezeigt, wie es im Forschungsprojekt Eureka 147 verwendet wird. Zur Datenreduktion kann neben dem bei Eureka 147 verwendeten Quellencodierungsverfahren ISO/MPEG Layer II jedes andere datenreduzierende Quellencodierverfahren eingesetzt werden. Desweiteren beruht die Erfindung auf der Tatsache, daß die im analogen Fernsehsignal abgestrahlte Energie im wesentlichen auf den Bildträger, die Tonträger und den Farbhilfsträger konzentriert ist. Dadurch ergibt sich im Spektrum des Fernsehsignals die Möglichkeit, ein im Vergleich zum Pegel des Bildträgers kleines digitales Signal in einer geeigneten Frequenzlage zu Bild und Tonträgern abzustrahlen (s. Bilder 1 und 2 und Tabelle 1).

Aus meßtechnisch ermittelten Schutzabstandskurven welche Verträglichkeitsrechnungen zwischen den analogen Fernseh-Systemen und dem digitalen Hörfunk-System DAB zugrunde liegen, läßt sich ableiten, daß bei
1. geeigneter Wahl der Frequenzlage des digitalen Datensignals,
2. geeigneter Wahl der Leistungsverhältnisse,
3. bei gleichzeitiger Abstrahlung des digitalen Datensignals vom selben Antennenträger oder sogar derselben Sendeantenne wie das Fernsehsignal mit zusätzlich angebrachten orthogonalen Strahlungselementen, und
4. bei orthogonaler Polarisation von analogem Fernsehsignal und digitalem Daten- bzw. Hörfunksignal
eine gleichzeitige Nutzung eines Fernsehkanals durch das analoge Fernsehsignal und das digitale Datensignal möglich ist.

Eine Beeinflussung des analogen Fersehsignals ist dabei zwar meßtechnisch nachweisbar, eine Beeinträchtigung der analogen Fersehversorgung ist jedoch für den Fersehteilnehmer bei geeigneter Wahl der Leistungsverhältnisse (s. Tabelle 1) nicht zu erwarten.

Erfindungsgemäß kann also der Fernseh- oder Hörfunkteilnehmer in einer Polarisationsebene (z.B. horizontal) das Fernsehsignal stationär mit einer Richtantenne empfangen, in der anderen Polarisationsebene (z.B. vertikal) das digitale Hörfunksignal (z.B. Eureka 147 DAB) mobil und stationär mit einer Rundempfangsantenne mit niedrigem Gewinn (z.B. Lambda/4 Antenne) empfangen. Neben der Verwendung der digitalen Übertragungskapazität zur rundfunkgemäßen Verbreitung von Hörfunkprogrammen ist auch eine Nutzung in Zusammenhang mit dem Fersehsignal denkbar, oder auch eine Nutzung zur Datenübertragung zwischen bestehenden Senderstandorten (z.B. im Sinne einer satellitengestützten Modulationszuführung für die analoge Hörfunkabstrahlung).

Bei Verletzung der oben genannten Bedingungen Nr.1 bis Nr.4 oder einzelner Teilbedingungen kann es zu starken Störungen des analogen Fersehempfangs kommen. Das Verfahren ist dann nur noch eingeschränkt anwendbar, da die erforderlichen Pegelverhältnisse zwischen analogem und digitalem Signal im allgemeinen nicht mehr an jedem Punkt des Versorgungsgebietes des Fernseh-Senders gegeben sind, und bei ungünstigen Frequenzverhältnissen ein Empfang des digitalen Signals unmöglich wird.

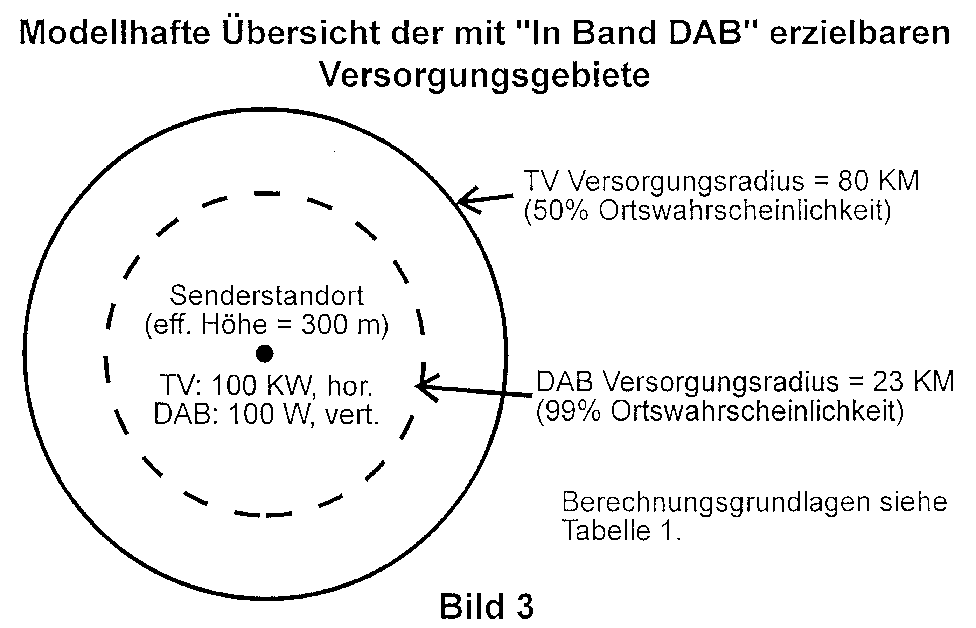

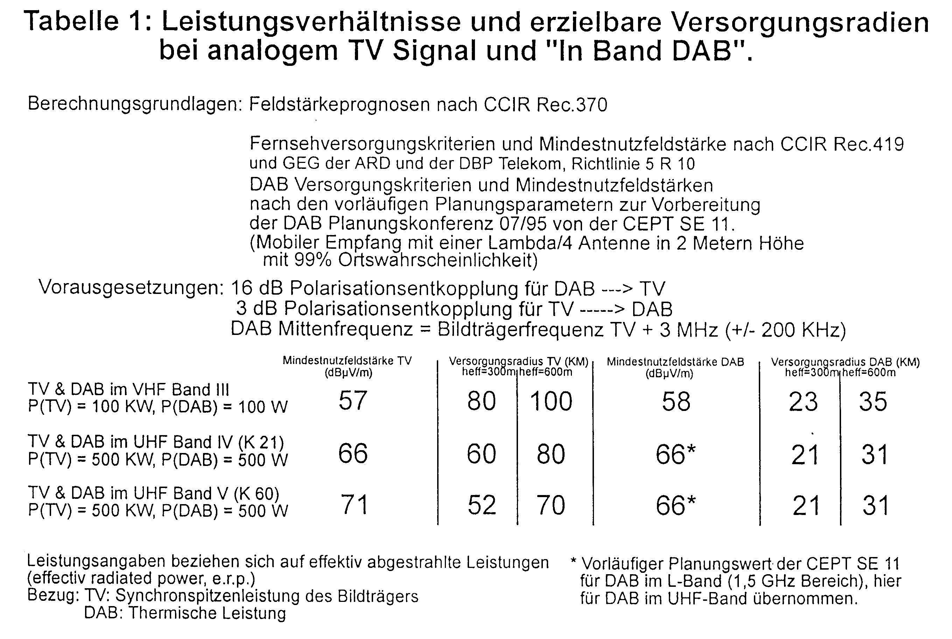

Die abgestrahlte Leistung (e.r.p. effective radiated power) des digitalen Datensignals muß ca. 30 db unterhalb der Strahlungsleistung des Fersehsenders liegen, um eine Beeinflußung des Fernsehbildes zu minimieren und gleichzeitig ein für die Versorgung des digitalen Hörfunksenders relevantes Versorgungsgebiet entstehen zu lassen (s. Tabelle 1 und Bild 3).

Daraus resultiert für einen Fernseh-Grundnetzsender mit 100 KW Strahlungsleistung ein lokaler "In-Band DAB"-Sender mit ca 100 Watt Strahlungsleistung.

Aus dieser Überlegung heraus ergibt sich, daß nur leistungsstarke Fernseh-Sender sinnvoll mit einem digitalem Signal unterlegt werden sollten, da sonst die mögliche Strahlungsleistung für den digitalen Signalanteil sehr gering und damit die zu erzielende lokale Versorgung unbefriedigend wird (s. Bild 3).

Weiterhin ergibt sich, daß zur Versorgung von großen Flächen, welche auch bei der terrestrischen Fernsehversorgung nur mit mehreren Grundnetzsendern versorgt werden können, ein Gleichwellennetz mit einem dafür geeigneten Modulationsverfahren (COFDM) auf einem von analogen Nutzern freiem Kanal die beste technische Lösung ist.

Zum Empfang des digitalen Datensignals wird der Tuner des Empfängers auf eine feste Differenzfrequenz bezüglich der Kanalfrequenz des unterlegten analogen Fernsehkanals eingestellt. Diese feste Differenzfrequenz entspricht dem Frequenzabstand zwischen der TV-Bildträgerfrequenz und der Mittenfrequenz f1* des DAB-Signals.

## Patentansprüche

1. Verfahren zum Übertragen eines digitalen Datensignals in einem analogen Fernsehkanal, wobei das Datensignal insbesondere digital codierte Hörfunkprogramme und Zusatzdienste umfaßt, **dadurch gekennzeichnet**, daß
- die Standorte von Sendern für das gleichkanalige, analoge Fernsehsignal und das digitale Datensignal identisch sind,
- die Trägerfrequenz (f1*) des digitalen Datensignals zwischen der Bildträgerfrequenz und der Farbhilfsträgerfrequenz des gleichkanaligen, analogen Fernsehsignals liegt,
- das gleichkanalige, analoge Fernsehsignal und das digitale Datensignal in orthogonaler Polarisation zueinander abgestrahlt werden, und
- die abgestrahlte Leistung des digitalen Datensignals in allen Richtungen wesentlich kleiner als die des gleichkanaligen analogen Fernsehsignals ist.

2. Verfahren nach Anspruch 1, **dadurch gekennzeichnet**, daß neben der terrestrischen Anwendung auch analoge Satellitenfernsehkanäle mit einem digitalen Datensignal innerhalb des Fernsehfrequenzspektrums unterlegt werden.

3. Verfahren nach Anspruch 1, **dadurch gekennzeichnet**, daß neben der rundfunkgemäßen Ausstrahlung auch eine Datenübertragung zu festen Empfangsstationen vorgesehen ist, wobei die Strahlungsleistung des digitalen Datensignals bei dieser Anwendung geringer ist, als bei der rundfunkmäßigen Anwendung mit mobilem Empfang.

4. Verfahren zum Empfangen eines gemäß den Ansprüchen 1, 2 oder 3 übertragenen digitalen Datensignals, **dadurch gekennzeichnet**, daß eine Abstimmvorrichtung auf einen festen Frequenzabstand zu der Kanalfrequenz eines Fernsehkanals eingestellt wird.
